# EUROPEAN PATENT SPECIFICATION

(11) **EP 3 048 044 B1**
(45) Date of publication and mention of the grant of the patent: **01.03.2017**
(21) Application number: 16151902.0
(22) Date of filing: 19.01.2016
(51) Int. Cl.: B64C 25/40, F16H 55/10, F16H 57/00, F16H 1/26

(54) **AIRCRAFT ELECTRIC DRIVE TRAIN WITH DAMPING/COMPLIANCE DEVICE**
ELEKTRISCHER FLUGZEUGANTRIEBSSTRANG MIT DÄMPFUNGS-/NACHGIEBIGKEITSVORRICHTUNG
TRAIN D'ENTRAÎNEMENT ÉLECTRIQUE D'AÉRONEF AVEC DISPOSITIF DE CONFORMITÉ/D'AMORTISSEMENT

(30) Priority: 23.01.2015 US 201514604542
(43) Date of publication of application: 27.07.2016
(73) Proprietor: Honeywell International Inc., Morris Plains, NJ 07950 (US)
(72) Inventor: CHRISTENSEN, Donald Jeffrey, Morris Plains, NJ New Jersey 07950 (US); MITCHELL, Robert, Morris Plains, NJ New Jersey 07950 (US)
(74) Representative: Houghton, Mark Phillip

(56) References cited:
- EP-A1- 0 457 711
- WO-A1-2014/023941
- WO-A1-2015/033160
- JP-A- 2007 309 417
- US-A1- 2010 005 914

## Description

### BACKGROUND OF THE INVENTION

The present invention generally relates to apparatus and methods for damping or adding a torque compliance device that may occur in electric drive trains of landing gear assemblies of aircraft with electric Green taxi systems (EGTSs).

EGTSs powered by auxiliary power units (APUs) may provide motive power for aircraft taxiing from landing to the gate, from the gate to the runway for takeoff, and from one location in an airport to another location in the airport. The EGTS may provide the motive power as an alternative to motive power traditionally provided by a combination of aircraft main engines and separate carts. The EGTS must be able to fully disengage from wheels of the landing gear assemblies for take-off and landing of the aircraft, and articulate into engagement with the wheels at a drive interface for taxi operations. Because of this requirement, components of the EGTS located on the landing gear assemblies, and especially those at the drive interface, must be able to withstand harsh environments, while transferring high levels of torque and speed. Methods of lubricating contact areas of the drive interface must be capable of being performed in these harsh environments.

Because of the physical location of the drive interface, it may be difficult to provide necessary lubrication to the drive interface between a pinion gear and sprocket at the wheel, with traditional teeth with matched geometries. Rollers of a roller gear (or roller pinion) and sprocket drive system may roll on the sprocket teeth rather than slide as gear teeth do. The lubrication may be achieved inside sealed rollers. However, because the roller geometry does not match the sprocket tooth geometry, there are two distinct torque variations that can occur - the first is due to the pressure angle variation of the gear tooth that the roller gear interfaces with; the second is due to any variation in the optimum center distance that was used to design the conjugate tooth profile. Both variations may not transfer torque and speed smoothly, resulting in a velocity ripple as the rollers pass through the teeth. This variation in torque/velocity transfer (also known as transmission error) may reduce gear and bearing life, and may cause motor control issues as it is transmitted back through the EGTS driveline.

Damping or compliance devices have been added to drivelines to reduce or eliminate transmission error, uneven rotational velocities, and/or vibrations in the driveline. However, adding additional components to a driveline may increase the physical space the driveline occupies. On a landing gear assembly, there is a limited amount of space. Adding an additional component to the EGTS driveline which occupies additional space can be unacceptable. PCT publication WO 2015/033160 discloses a drive system in which a drive shaft is arranged to rotate a pinion gear around a drive axis and flexible interface to permit tilting of the pinion gear to solve the problem of deformation of landing gear during use. PCT publication WO 2014/023941 discloses a landing gear drive system with two drive paths in which the system is switchable between the two drive paths. US publication 2010/0005914 discloses a power steering device in which a compliant member allows rotational compliance of a second gear while avoiding axial and radial compliance. EP publication 0457711 A1 discloses a split drive which includes an elastomeric torsional vibration damper to balance the torque load between a pair of torque splitting gear assembly to reduce the number of bearings and part complexity.

Document JP2007309417 A describes a torsional elastic member positioned between an output shaft and a pinion gear.

As can be seen, there is a need for an EGTS with damping at high torques and speeds to maintain acceptable component life and motor control, while minimizing the space the EGTS occupies.

### SUMMARY OF THE INVENTION

In one aspect of the present invention, a roller gear comprises a housing including a first driven housing portion and a second driving housing portion; rollers connected between the first driven housing portions and the second driven housing portion; and a spring-like coupling within the housing, and fixedly connected to the first driven housing portion and to the second driving housing portion.

In another aspect of the present invention, a damping or compliance device in a driveline comprises a cylindrical body at one end; an annular wall at another end; a spring portion between the cylindrical body and annular wall; wherein the one end and the another end are configured to be fixedly attached to and entirely disposed within a component of the driveline; wherein the spring portion includes windings or helical cuts, and a ratio of number of windings or helical cuts to a longitudinal length L (cm) of the damping or compliance device is from about 1:3 to about 10:1.The exact length is dependent on the level of compliance that will be required to reduce the transmission error to an acceptable level.

In yet another aspect of the present invention, an electric motor assembly for an electric taxi drive system comprises a motor; a gear box driven by the motor; a roller gear driven by the gear box; wherein the roller gear includes: a housing; a coupling disposed entirely within the housing; wherein the coupling has a torsion characteristic of from about30N-M/degree to about 800N-M/degree.

These and other features, aspects and advantages of the present invention will become better understood with reference to the following drawings, description and claims.

### BRIEF DESCRIPTION OF THE DRAWINGS

Fig. 1A is a perspective view of a landing gear assembly with an EGTS according to an exemplary embodiment of the present invention;
Fig. 1 B is a plan view of some of the components of the landing gear assembly of Fig. 1A;
Fig. 2 is a schematic of an exemplary electric drive train for an EGTS according to an exemplary embodiment of the present invention;
Fig. 3A is a perspective view of a roller gear and some of the roller gear internal components, according to an exemplary embodiment of the present invention;
Fig. 3B is a cutaway view taken along line 3B-3B of the roller gear of Fig. 3A;
Fig. 4A is a perspective view of a flexible coupling according to an exemplary embodiment of the present invention;
Fig. 4B is a second perspective view of the flexible coupling of Fig. 4A.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Various inventive features are described below that can each be used independently of one another or in combination with other features. However, any single inventive feature may not address any of the problems discussed above or may address only one of the problems discussed above. Further, one or more of the problems discussed above may not be fully addressed by any of the features described below.

The present invention generally provides a flexible coupling in an EGTS driveline which may be incorporated into one of the driveline components. The flexible coupling may damp or provide compliance to the velocity ripples, defined as transmission error above, in the driveline as torque and speed are unevenly transmitted at a drive interface while minimizing the additional space occupied by the coupling.

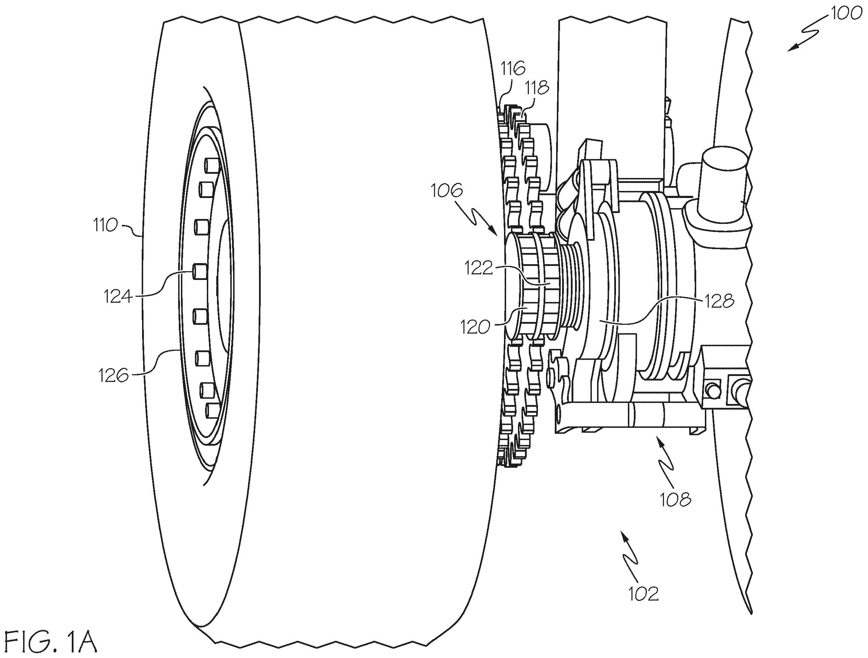

Referring now to Fig. 1A, an exemplary landing gear assembly 100 with an EGTS102 is illustrated in a perspective view. The landing gear assembly 100 may be selectively driven by the EGTS 102 to move the aircraft on the ground. The landing gear assembly 100 may be a part of an aircraft (not shown) and may include a wheel assembly 110. The wheel assembly 110 may include one or more wheels 124, tires 126 mounted on the wheels 124, and a sprocket 116 with sprocket teeth 118. The sprocket 116 may be fixedly attached to the wheel 124.

The landing gear assembly 100 may include an electric motor assembly 108. The electric motor assembly 108 may include an electric motor 114, a gearbox 128, and roller gear 120 with rollers 122. The roller gear 120may be driven by the electric motor108.

The electric motor assembly 108 may be moveable between a first engaged position and a second unengaged position. Fig. 1A illustrates the electric motor assembly 108 in the first engaged position, with the rollers 122 of the roller gear 120 engaged with the sprocket teeth 118 forming a drive interface 106.

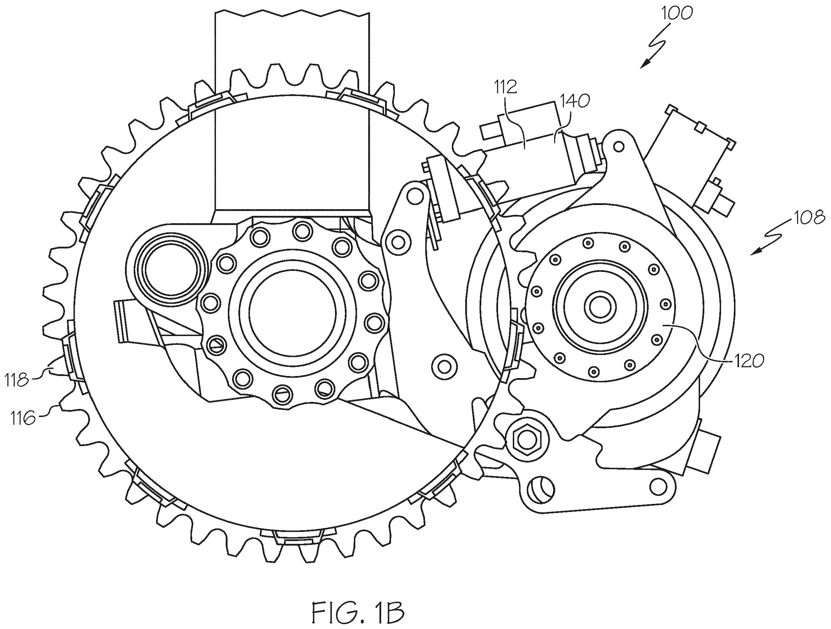

Referring now to Fig. 1 B, some of the components of the landing gear assembly 100 are illustrated in a plan view. The EGTS 102 may include an EGTS actuator 112 connected to the electric motor assembly 108 to selectively move the electric motor assembly 108 between the first engaged position (shown in Figs. 1A and Fig. 1 B) and the second unengaged position (not shown). In one non-limiting example, the EGTS actuator may include a hydraulic cylinder assembly 140.

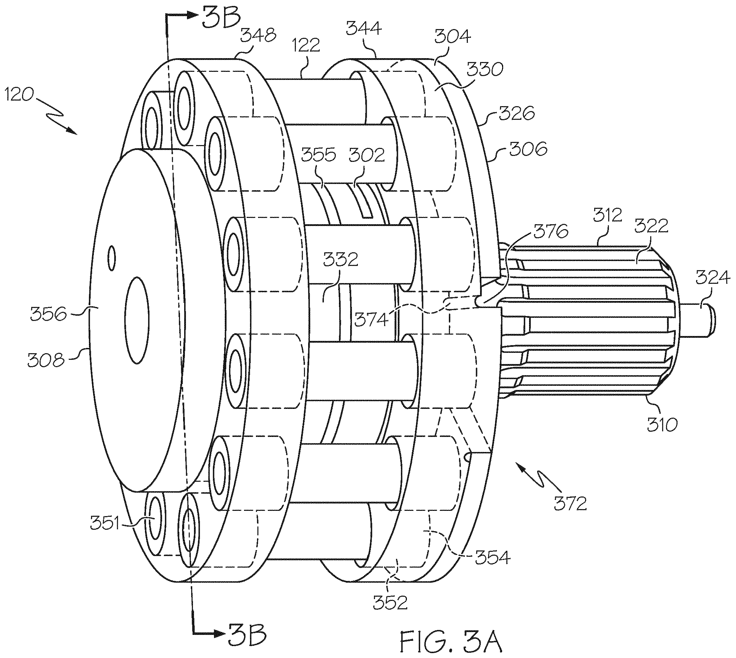

When the roller gear 120 is in driving engagement with the sprocket 116, the rollers 122 may roll on the sprocket teeth 118, and the sprocket teeth 118 may protrude into spaces 355 (shown in Fig. 3A) between the rollers 122, driving the sprocket 116 to turn the wheel 124.Thus, the EGTS actuator 112 may move the electric motor assembly 108 into and out of driving connection with the wheel 124. The electric motor assembly 108 may be moved into driving connection with the wheel 124 when the EGTS 102 is to provide motive power for the aircraft during taxis.

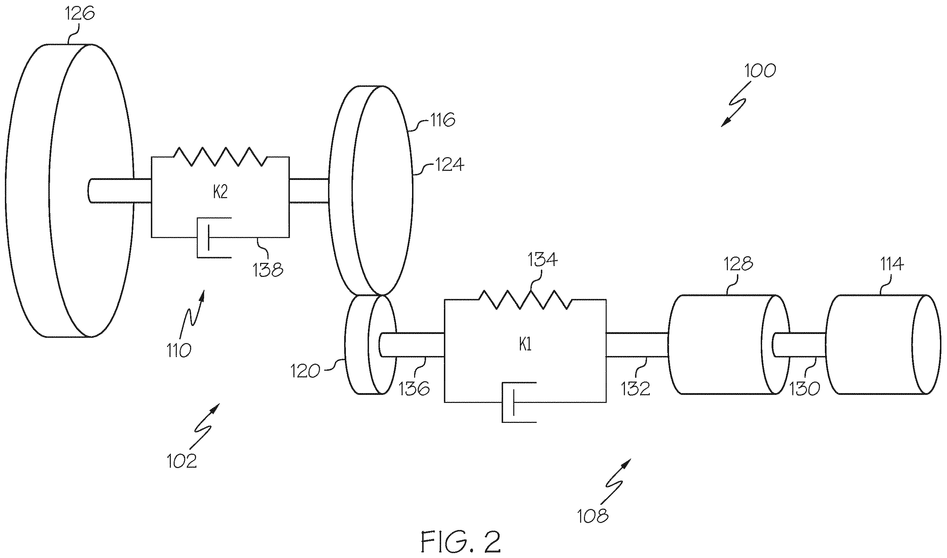

Referring now to Fig. 2, a schematic illustrates an exemplary embodiment of the electric motor assembly 108 in a first engaged position with the wheel assembly 110. The electric motor 108 may convert electrical power into mechanical rotational power and rotatably drive a first shaft 130. The first shaft 130 may provide mechanical rotational power at a first speed and torque to the gear box 128. The gearbox 128 may convert the mechanical rotational power at the first speed and torque to mechanical rotational power at a second speed and torque, and drive a second shaft 132.

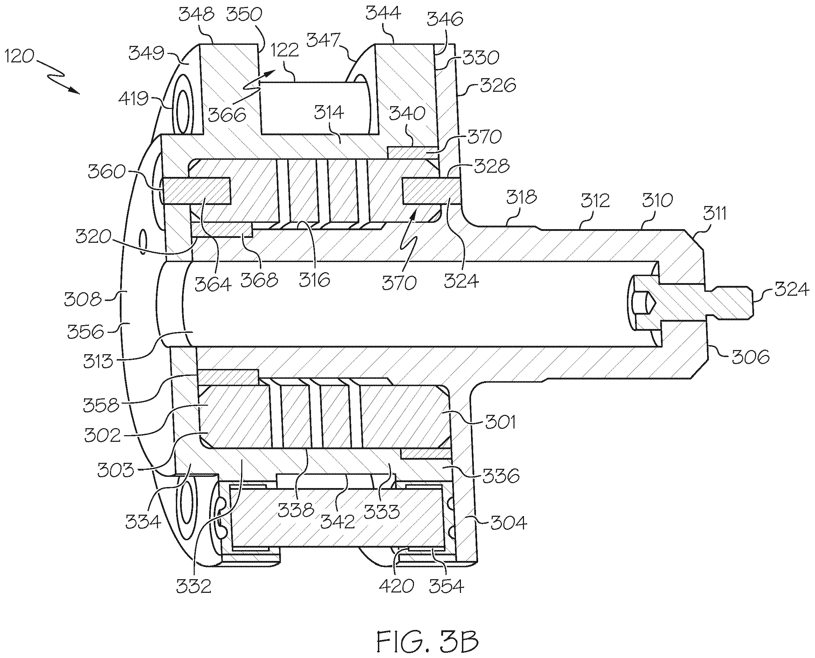

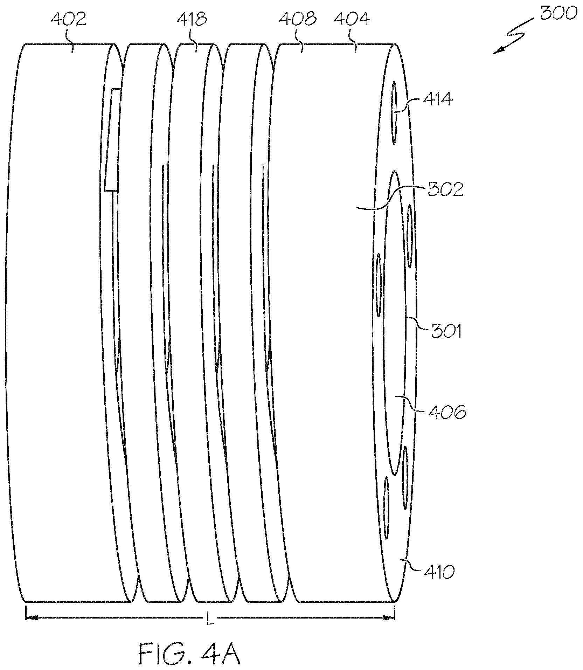

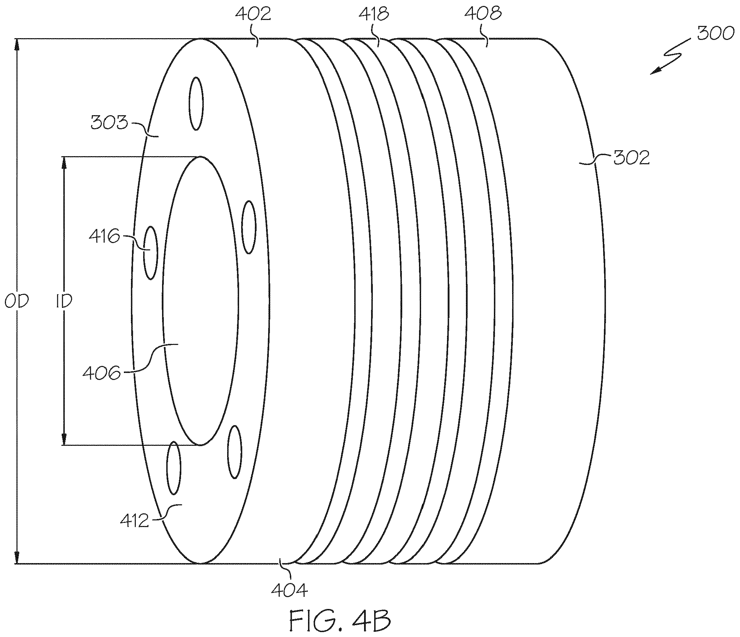

An EGTS damping/compliance device 134 is shown schematically between the second shaft 132 and a third shaft 136. The EGTS damping device 134 may be incorporated into a component of the electric motor assembly 108. For example, the EGTS damping/compliance device 134 may embody a spring-like coupling, a compliance spring 302 (Figs. 3B, 4A, and 4B) and be incorporated into the roller gear 120. In another embodiment, the EGTS damping/compliance device 134 may be incorporated into the gearbox 128.

When the roller gear 120 is transferring rotational motion to the sprocket 116, and the sprocket teeth 118 profile has a change to the pressure angle and the true center distance used to determine the conjugate tooth profile may vary, a velocity ripple, defined as transmission error above, may occur as each roller gear tooth makes contact with each gear tooth 116 is in contact. The velocity ripple may include deviation between the desired and commanded steady-state rotational velocity to be transferred to the sprocket 116, and the actual rotational velocity at the drive interface 106. Larger transmission errors may increase the risk of noise or vibration problems in the driveline of the electric motor assembly 108. These stresses may reduce the life or cause damage to components of the electric motor assembly 108 and or gearbox components 128.

The EGTS damping/compliance device 134 can reduce velocity ripple and/or transmission error originating in the drive interface 106 between the roller gear 120 and the sprocket 116 and will have even a larger impact in reducing the effect on the downstream components (108 & 128).The EGTS damping/compliance device 134 may be configured to allow some rotational misalignment between the electric motor 114 output and the drive interface 106. In embodiments where the damping device 134 is incorporated into the roller gear 120, the allowed rotational compliance may be from about 0.1 degrees to about 10 degrees, or from about 0.25 degrees to about 7 degrees, or from about 0.5 to about 5 degrees

The allowed rotational compliance may be achieved, for example, when the damping/compliance device 134 is a compliance spring 302 (Figs. 3B, 4A, and 4B) and that is spring-like in function and helical in configuration. The compliance spring 302 can allow twist. The twisting of the compliance spring 302 may allow rotational compliance between the components, and thus the electrical motor 114 and the drive interface 106. The amount of allowed twist may depend on the physical geometry, and material of the compliance spring 302. In embodiments shown, the amount of twist or torsion may be from about 0.25 degrees to about 8 degrees, or from about 0.5 degrees to about 5 degrees, or from about 0.5 degrees to about 4 degrees, when measured by coupling spring rate and torque.

A component driven by the electric motor 114 may be fixedly connected to a first coupling end 301 (shown and described below in relation to Figs. 3B, 4A, and 4B) of the compliance spring 302. Another component fixedly connected to the drive interface 106 may be fixedly connected to a second coupling end 303 (shown and described below in relation to Figs. 3B, 4A, and 4B) of the compliance spring 302.

Other non-limiting examples of EGTS damping devices 134 configured to allow some rotational compliance between the electric motor 114 and the drive interface 106 may include fluid couplings, flexible materials used to connect components of a driveline, or other damping devices known in the art which may allow for the damping of resonant frequencies which may exist in the compliance spring 302 or the entire assembly.

The design and damping capability of the EGTS damping/compliance device 134 may be chosen, at least in part, by the speed and torque transfer requirements of the drive interface 106, and the available space for locating the ETS damping device 134 on the landing gear assembly. The damping capability and transmission error reduction of the EGTS damping/compliance device 134 can be quantitatively characterized by a transmission error testing model, such as a vibration test or acoustic measurements. Using such testing model, and in embodiments wherein the damping/compliance device 134 is in incorporated into roller gear 120, the damping capability can be a transmission error reduction of from about 1% to about 95%, or from about 3% to about 90%, or from about 5% to about 70%.

Still referring to Fig. 2, the third shaft 136 may be rotatably powered by the gearbox 128 and may rotatably drive the roller gear 120. The roller gear 120, when drivingly engaged with the sprocket 116, may drive the sprocket 116. The sprocket 116 may drive the wheel 124 with the tire 126 mounted thereon. A wheel damping device 138 is schematically shown between the wheel 124 and the tire 126. Exemplary embodiments of the wheel damping device 138 may include the tire 124 wall and/or flexible couplings between the sprocket 116 and tire 124, which is known in the art to reduce velocity ripple and/or transmission error.

Referring now to Fig. 3A, an exemplary embodiment of the roller gear 120 is illustrated in a perspective view showing some internal components. The roller gear 120 may include a housing 304 and multiple rollers 122. The housing 304 may include a first driven housing portion 306 configured to be rotatably driven, and a second driving housing portion 308, including a first annular rail 344 and a second annular rail 348. In one example, the first driven housing portion 306 may be driven by the electric motor 114, and the second driving housing portion 308 may drive the sprocket 116, when the electric motor assembly 108 is in the engaged position. The multiple rollers 122 may be rotatably connected between and to the first annular rail 344 and the second annular rail 348.

Referring now to Fig. 3B, a cutaway view taken along line 3B-3B of Fig. 3A of the roller gear 120 is illustrated. The compliance spring 302 may include a first coupling end 301 and a second coupling end 303. The first coupling end 301 may be fixedly connected, via pin 324, to the first driven housing portion 306. The second coupling end 303 may be fixedly connected, via pin 364, to the second driving housing portion 308.

The first driven housing portion 306 may include a shaft 310 which may be an elongated and generally cylindrically shaped member, with a raised annular portion 318. The shaft 310 may include a first shaft end 311 and a second shaft end 313. Portions of the shaft 310 may be hollow to reduce weight and provide a method of securing housing 304 to output shaft 132 from gearbox 128. The first driven housing portion 306 may include a radial annular disc 326 radiating outward from and fixedly connected to the raised annular portion 318. The radial annular disc may be generally perpendicular to the shaft 310. The shaft 310 may include an outer shaft half 312 and an inner shaft half 314.The outer shaft half 312 may extend in one direction from the radial annular disc 326, and the inner shaft half 314 may extend in an opposite direction from the radial annular disc 326. The inner shaft half 314 may include an outer wall 316. The outer wall 316 may include a bushing annular indentation 320 which may be generally annular and cylindrical in shape.

The shaft 310 may be drivingly attached to a driving component, examples of which are described below, at the first shaft end 311, through teeth 322, and a pin 324 (Fig. 3A). For example, when the roller gear 120 is a component of the ETS 102, the shaft 310 may be drivingly attached to another shaft being driven by the gearbox 128, or the gear box 128 may include teeth which are a mirror image of the teeth 322, and drivingly connect to the teeth 322. In alternative embodiments, driving connections may include, but are not limited to, discs with apertures for bolting to other discs, flanges for welding to a driving component, or other driving connections as known in the art.

The radial annular disc 326 may include one or more connector apertures 328 for connecting, via pins, the radial annular disc 326, and thus the first driven housing portion 306, to the first coupling end 301. The radial annular disc 326 may include a disc inner surface 330.

The second driving housing portion 308 may include a hollow cylindrical member 332, the first annular rail 344, the second annular rail 348, and a disc member 356. The hollow cylindrical member 332 may include a cylindrical member wall 333 with an inner cylindrical wall surface 338 and an outer cylindrical wall surface 342, a first cylindrical member end 334, and a second cylindrical member end 336. The inner cylindrical wall surface 338 may include a bushing annular indentation 340 near the second cylindrical member end 336, which may be generally annular and cylindrical in shape.

The first annular rail 344 may radiate outward from and be fixedly connected to the hollow cylindrical member 332 at the second cylindrical member end 336, and include a first rail outer surface 346 and a first rail inner surface 347. A portion of the first rail outer surface 346 may abut a portion of the disc inner surface 330.The second annular rail 348 may radiate outward from and be fixedly connected to the hollow cylindrical member 332 closer to the first cylindrical member end 334 than the first annular rail 344, and include a second rail outer surface 349 and a second rail inner surface 350.

The first annular rail 344 and the second annular rail 348 may be essentially parallel to each other, and each may include multiple roller apertures 419 (Fig. 3A). Each roller aperture 419 on the first annular rail 344 may align with a corresponding roller aperture 419 on the second annular rail, such that each roller 122 may be rotatably connected between a roller aperture 351 on the first annular rail 344 and a roller aperture 419 on the second annular rail 348. Roller bearings 420 may be positioned in the roller apertures 419 to rotatably connect the rollers 122 between the first annular rail 344 and the second annular rail 348. In a non-limiting example, the roller bearings 420 may be needle bearings.

The disc member 356 may be fixedly attached to the first cylindrical member end 334, be generally perpendicular to the cylindrical member wall 333, and include a disc inner surface 358 (Fig. 3B). The disc member 356 may include one or more connector apertures 360 for connecting the disc member 356 to the second coupling end 303, and thus the second driving housing portion 308 to the second coupling end 303. A portion of the disc inner surface 358 may also abut the first shaft end 311.

An inner bushing 368 may be positioned in the bushing annular indentation 320 (Fig. 3B). An outer bushing 370 may be positioned in the bushing annular indentation 340. The inner bushing 368 and the outer bushing 370 may provide some damping between the first driven housing portion 306 and the second driving housing portion 308, and for the EGTS 102, when the roller gear 120 is a component of the EGTS 102.

A first connector 362 may connect the first driven housing portion 306 and the first coupling end 301 (Fig. 3B). In the embodiment illustrated, the first connector 362 may include one or more pins 364, each pin 364 being inserted through one of the connector apertures 328 on the radial annular disc 326 into an aligned top connector aperture 414 (Fig. 4A) on the compliance spring 302. A second connector 366 may connect the second driving housing portion 308 and the second coupling end 303. In the embodiment illustrated, the second connector 364 may include one or more pins 364, each pin 364 being inserted through one of the connector apertures 360 on the disc member 356 into an aligned bottom connector aperture 416 (Fig. 4A) on the flexible compliance spring 302.

In some high torque transfer applications, such as when the aircraft might have to start moving from a complete stop, it may be desirable to limit any twisting and/or the damping/compliance ability of the compliance spring 302, to ensure against damage to the coupling and/or other EGTS 102 components. The roller gear 120 may include a stop device 372 to limit the damping of the compliance spring 302 (Fig. 3A). The stop device 372 may, as in the illustrated embodiment, include a notch 376, which may be located on the second driving housing portion 308, for example on the first rail outer surface 346. The stop device 372 may also include a key 374, which may fit in the notch 376 and limit how far out of alignment the second driving housing portion 308 may rotate with respect to the first driven housing portion 306. The key 374 may be located on the first driven housing portion 306, for example on the disc inner surface 330. Other stop devices 372 may be alternatively used.

Referring now to Figs. 4A and 4B an exemplary compliance spring 302 is illustrated. The compliance spring 302, when coupled between two components of a driveline, may allow a rotational compliance between the two driveline components. In embodiments, the compliance spring 302 may be entirely positioned within the housing 304, as well as the entirely within the first and second driven housing portions 306, 308.

In embodiments, the compliance spring 302 may be made of a flexible material. In the context of the present invention, "flexible" is defined as spring steel or other high strength steel. Thus, for example, one or more polymers such as polyurethane can be used. In other embodiments, the compliance spring 302 may be made of one or more elastomers such as nitrile rubber, butyl rubber, natural rubber, and fluoroelastomers.

In the embodiment illustrated (Figs. 4A-4B), the compliance spring 302 may include a hollow cylindrical body 402 including an annular wall 404. The annular wall 404 may include an inside surface 406 and an outside surface 408. The annular wall 404 may include a helical spring portion 418 including helical paths or turns or windings(from about one to six) extending radially outwardly from the inside surface 406 to the outside surface 408.Thus, there can be multiple helical paths starting and ending in the same place axially, but initiating from evenly spaced positions radially. In embodiments, the ratio of number of helical paths or windings to a longitudinal length L (cm) of the coupling may be about 0.25:10, or about 0.5:8, or about 2:5.

The compliance spring 302 may include a top surface 410, a portion of which may abut a portion of the disc inner surface 330. The helical compliance spring 302 may include a bottom surface 412, a portion of which may abut the disc inner surface 358.

The compliance spring 302 may include one or more top connector apertures 414, which may align with the connector apertures 328 on the radial annular disc 326. The helical compliance spring 302 may include one or more bottom connector apertures 416, which may align with the connector apertures 360 on the disc member 356. A portion of the outside surface 408 may abut a portion of the inner cylindrical wall surface 338 and the outer bushing 370. A portion of the inside surface 406 may abut a portion of the raised annular portion 318 and the inner bushing 368. Friction from these components (408 to 370 to 338 and 406 to 368 to 318) which may occur during rotational compliance may add some level of damping for resonant frequencies.

The compliance spring 302 may include an outer diameter OD, an inner diameter ID, and a thickness T of the annular wall 404. In embodiments, the ratio of OD to ID may be about 20:1, or about 10:1, or about 1.1:1.

In embodiments, the ratio of Length L to thickness T may be about 40:1, or about 20:1, or about 4:1.

In embodiments, the compliance spring 302 may have a torsion characteristic of from about 100 N-M/degree to about 1500 N-M/degree, or from about 200 N-M/degree to about 700 N-M/degree, or from about 400 N-M/degree to about 700 N-M/degree.

In accordance with the present invention, the compliance spring 302 can eliminate additional space requirements needed by past damping devices that are not incorporated into an already existing component of a driveline. For example, the compliance spring 302 can eliminate past space requirements in a driveline for an EGTS of from about 4cm to about 20cm, or from about 5cm to about 12cm, or from about 6cm to about 10cm.

The present invention, including the compliance spring 302, provides a non-obvious solution to the problem of transmission error/ripple in drivelines and, in particular roller gears used in low torque, high low speed applications of an EGTS of an aircraft because of limited space and harsh environment concerns. One reason that the present invention is a non-obvious solution is because the high speed and torque would discourage the use of a roller gear with a known transmission error problem. Another reason is that, schematically, a compliance/damping device appears in-line as part of the drive shaft and not "folded" into a roller gear.

In operation of the present invention, when an aircraft is on the ground taxiing, it may be desirous to use an auxiliary power unit (APU) (not shown) to power the EGTS 102 and provide motive power rather than the main engines (not shown). The EGTS actuator 112 may move the electric motor assembly 108 such that the rollers 122 engage the sprocket teeth 118 to provide the motive power from the APU.

The electric motor 108 may be powered by the APU to rotatably drive the roller gear 120. The electric motor 108 may drive the gearbox 128, the gearbox 128 may drive the first driven housing portion 306 of the roller gear 120, the first driven housing portion 306 may drive the compliance spring 302, and the compliance spring 302 may drive the second driving housing portion 308 of the roller gear 120. As the second driving housing portion 308 is rotatably driven, the first and second annular rails 344, 348 may rotate, bringing the rollers 122, one by one, in contact with a sprocket tooth 118. As the first and second annular rails 344, 348 rotate, a roller 122 may engage a sprocket tooth 118, slide down the sprocket tooth 118, and then disengage from the sprocket tooth 118. As, or after, the roller 122 disengages the sprocket tooth 118, another roller 122 may engage another sprocket tooth 118, thus driving the sprocket 116. As the roller gear 120 continues to be driven, and the electric motor assembly 108 continues to be in a position where the rollers 122 engage the sprocket teeth 118, this cycle continues to repeat itself as each roller 122 engages and disengages from a sprocket tooth 118.

Because the rollers 122 may not mirror the sprocket teeth 118, as one of the rollers 122 moves down a sprocket tooth 118, and transfers speed and torque, there may be a small variances in the amount of speed and torque transferred from the roller gear 120 to the sprocket 116 during a cycle as the angle of contact changes due to the differences in profile between the rollers 122 and the sprocket teeth 118. This creates a velocity ripple in the EGTS 102 driveline. The compliance spring 302 may be flexible enough to twist and allow axial rotational compliance between the first driven housing portion 306 and the second driving housing portion 308. This twisting motion of the compliance spring 302 may damp the velocity ripple.

## Claims

1. A roller gear, comprising:
a housing (304) including a first rail (344) and a second rail (348);
rollers (122) connected between the first rail (344) and the second rail (348);
**characterized in that**:
the housing (304) has a driving portion (308) and a driven portion (306);
a compliance spring (302) with a torsion characteristic is interposed between the driving portion (308) and the driven portion (306);
the compliance spring (302) has a second end (303) connected to the driving portion (308) and a first end (301) connected to the driven portion (306);
an outer bushing (370) is interposed between the first end (301) of the compliance spring and the driving portion (308) of the housing; and an inner bushing (368) is interposed between the second end (303) of the compliance spring and the driven portion (306) of the housing.

2. The roller gear of claim 1, wherein the compliance spring (302) includes a helical portion (418).

3. The roller gear of any one of claims 1-2, wherein an entirety of the compliance spring (302) is within the housing (304).

4. The roller gear of any one of claims 1-3, further comprising:
a stop device (372) to limit torsional displacement of the compliance spring, wherein the stop device includes a key and a notch.

## Patentansprüche

1. Rollengetriebe, umfassend:
ein Gehäuse (304), das eine erste Schiene (344) und eine zweite Schiene (348) enthält;
Rollen (122), die zwischen der ersten Schiene (344) und der zweiten Schiene (348) verbunden sind;
**dadurch gekennzeichnet, dass**
das Gehäuse (304) einen Antriebsteil (308) und einen angetriebenen Teil (306) aufweist;
eine elastische Feder (302) mit einer Torsionseigenschaft zwischen dem Antriebsteil (308) und dem angetriebenen Teil (306) angeordnet ist;
die elastische Feder (302) ein zweites Ende (303), das mit dem Antriebsteil (308) verbunden ist, und ein erstes Ende (301), das mit dem angetriebenen Teil (306) verbunden ist, aufweist;
eine äußere Buchse (370) zwischen dem ersten Ende (301) der elastischen Feder und dem Antriebsteil (308) des Gehäuses angeordnet ist; und
eine innere Buchse (368) zwischen dem zweiten Ende (303) der elastischen Feder und dem angetriebenen Teil (306) des Gehäuses angeordnet ist.

2. Rollengetriebe nach Anspruch 1, wobei die elastische Feder (302) einen schraubenförmigen Teil (418) enthält.

3. Rollengetriebe nach einem der Ansprüche 1 - 2, wobei sich die gesamte elastische Feder (302) in dem Gehäuse (304) befindet.

4. Rollengetriebe nach einem der Ansprüche 1 - 3, ferner umfassend:
eine Anschlagvorrichtung (372) zum Begrenzen von Torsionsverschiebung der elastischen Feder, wobei die Anschlagvorrichtung einen Keil und eine Kerbe enthält.

## Revendications

1. Roue d'engrenage à rouleaux comprenant :
un logement (304) comprenant un premier rail (344) et un second rail (348) ;
des rouleaux (122) raccordés entre le premier rail (344) et le second rail (348) ;
**caractérisée en ce que**
le logement (304) comporte une partie menante (308) et une partie menée (306) ;
un ressort d'élasticité (302) présentant une caractéristique de torsion est intercalé entre la partie menante (308) et la partie menée (306) ;
le ressort d'élasticité (302) comporte une seconde extrémité (303) raccordée à la partie menante (308) et une première extrémité (301) raccordée à la partie menée (306) ;
une bague extérieure (370) est intercalée entre la première extrémité (301) du ressort d'élasticité et la partie menante (308) du logement ; et
une bague intérieure (368) est intercalée entre la seconde extrémité (303) du ressort d'élasticité et la partie menée (306) du logement.

2. Roue d'engrenage à rouleaux selon la revendication 1, dans laquelle le ressort d'élasticité (302) comprend une partie hélicoïdale (418).

3. Roue d'engrenage à rouleaux selon l'une quelconque des revendications 1 et 2, dans laquelle l'intégralité du ressort d'élasticité (302) se trouve à l'intérieur du logement (304).

4. Roue d'engrenage à rouleaux selon l'une quelconque des revendications 1 à 3, comprenant en outre :
un dispositif d'arrêt (372) servant à limiter le déplacement par torsion du ressort d'élasticité, dans laquelle le dispositif d'arrêt comprend une clavette et une encoche.
